# EUROPÄISCHE PATENTSCHRIFT

(11) **EP 2 505 703 B1**
(45) Veröffentlichungstag und Bekanntmachung des Hinweises auf die Patenterteilung: **03.12.2014**
(21) Anmeldenummer: 11160057.3
(22) Anmeldetag: 28.03.2011
(51) Int. Cl.: D03C 9/02, B21F 45/08

(54) **Weblitze aus Kunststoff sowie Verfahren zu deren Herstellung aus einer Folienbahn**
Plastic heald and method for producing same from a sheet of film
Lisse en matière synthétique et procédé de fabrication à partir d'une bande de feuilles

(43) Veröffentlichungstag der Anmeldung: 03.10.2012
(73) Patentinhaber: Groz-Beckert KG, 72458 Albstadt (DE)
(72) Erfinder: Gerth, Christian, Dr., 72458 Albstadt (DE); Großmann, Rainer, 72477 Schwenningen (DE); Gusenko, Mario, 72458 Albstadt (DE); Münster, Bernhard, 72469 Meßstetten (DE); Fäller, Armin, 72459 Albstadt (DE)
(74) Vertreter: Rüger, Barthelt & Abel

(56) Entgegenhaltungen:
- CH-A5- 601 532
- KR-B1- 100 823 876

## Beschreibung

Die vorliegende Erfindung betrifft eine Weblitze für einen Webschaft einer Webmaschine. Die Weblitze weist einen Litzenkörper auf, der in Längsrichtung etwa mittig ein Fadenauge zur Aufnahme eines Kettfadens aufweist. Durch die Bewegung des Webschafts werden die von den Weblitzen geführten Kettfäden zur Öffnung oder zur Schließung eines Webfachs positioniert.

Eine Weblitze unterliegt einer großen Beanspruchung. Moderne Webmaschinen arbeiten mit hohen Webgeschwindigkeiten, so dass der webschaft und die darin angeordneten Weblitzen stark beschleunigt bzw. verzögert werden. Der durch das Fadenauge geführte Kettfaden und die zwischen zwei benachbarten Weblitzen zu anderen Webschäften hindurch geführten Kettfäden bewegen sich relativ zu den Weblitzen, wodurch ein Verschleiß an der Weblitze verursacht wird. Abhängig von den für die Kettfäden verwendeten Garnen kann es dadurch zu einem übermäßig schnellen Verschleiß der Weblitze kommen. Die Weblitze muss ersetzt werden, was aufwendige und teure Webmaschinenstillstände mit sich bringt.

KR 100823876 B1 beschreibt ein Verfahren, bei dem eine Folienbahn extrudiert wird. Die Folienbahn ist nicht gleichmäßig dick, sondern hat in einem mittleren Abschnitt und in zwei äußeren Abschnitten jeweils eine größere Dicke. Aus dieser Folienbahn kann ein Litzenkörper herausgetrennt werden.

In der CH 601 532 A5 wird eine Weblitze beschrieben, deren Litzenkörper aus einem Flachstahl oder aus Doppeldraht besteht. Im Bereich der Endösen ist an den Flachstahl Kunststoffmaterial derart angespritzt, dass es sich zumindest in den Bereichen der Endösen befindet, der mit der Litzentragschiene des Webschafts in Kontakt kommen. Auf diese Weise soll eine Dämpfung und Lärmreduzierung erreicht werden.

Ferner beschreibt die EP 0 403 429 A1 die Möglichkeit, eine Weblitze vollständig aus Kunststoff herzustellen. Das Kunststoffmaterial dient hierbei als Kunststoffmatrix, die mit einem Schlauchgeflecht aus verschiedenen Fasersträngen verbunden ist. Zur Herstellung der Weblitze wird dieses Verbundmaterial als Meterware produziert und in der gewünschten Länge abgeschnitten. Anschließend werden das Fadenauge und die Endösen durch einen thermoplastischen Umformprozess ausgebildet.

Eine weitere aus Kunststoff hergestellte Weblitze ist aus der EP 2 224 046 A1 bekannt. Diese Kunststofflitze zeichnet sich durch eine besondere Ausbildung der Leitflächen im Bereich des Fadenauges aus.

Weiter offenbart die DE 10 2005 030 632 A1 eine Kunststoff-Weblitze, deren Fadenauge durch zwei seitlich gegerieinander versetzte Stege begrenzt ist. Oben und unten schließen sich an das Fadenauge verdickte rampenartige Bereiche an, die dazu dienen, benachbarte Weblitzen auf Abstand zu halten und zwischen zwei benachbarten Weblitzen verlaufende Kettfäden schonend an der Außenfläche gleiten zu lassen.

Ausgehend von diesen bekannten Weblitzen kann es daher als Aufgabe der vorliegenden Erfindung angesehen werden, eine leichte, verschleißfeste Weblitze zu schaffen, die kostengünstig herstellbar ist.

Erfindungsgemäß ist es bei einer ersten Ausgestaltung vorgesehen, dass der Litzenkörper der Weblitze aus mehreren unterschiedlichen Kunststoff- oder Verbundmaterialien hergestellt ist. Der Litzenkörper weist zumindest zwei und vorzugsweise drei bis fünf Längsabschnitte auf, die sich in Längsrichtung des Litzenkörpers aneinander anschließen. Zwei unmittelbar aneinander angrenzende Längsabschnitte des Litzenkörpers bestehen aus unterschiedlichen Kunststoff- oder Verbundmaterialien.

Das Kunststoff- oder Verbundmaterial kann elektrisch leitfähig sein bzw. elektrisch leitfähige Bestandteile aufweisen, um ein elektrostatisches Aufladen der Kunststofflitze zu verhindern. In Gebrauchslage der Litze ist durch deren elektrisch leitfähige Bestandteile eine elektrische Verbindung zu wenigstens einer elektrisch leitfähigen Litzentragschiene hergestellt, um eine elektrische Ableitung über die Litzentragschiene des Webschafts zu ermöglichen und dadurch eine statische Aufladung des Litzenkörpers zu verhindern. Es ist möglich, dass der gesamte Litzenkörper der Kunststofflitze aus elektrisch leitfähigem Kunststoff- oder Verbundmaterial besteht oder dass nur einzelne Lagen eines mehrlagigen Litzenkörpers elektrisch leitfähig sind. Beispielsweise können die elektrisch leitfähigen Lagen bzw. der Litzenkörper insgesamt aus Verbundmaterial bestehen, das eine nicht elektrisch leitfähige Kunststoffmatrix enthält, die mit elektrisch leitfähigen Zusatzelementen zum Beispiel aus Metall und/oder Graphit verbunden ist. Als Zusatzelemente können beispielsweise lange Fasern und/oder sogenannte Whiskers und/oder Nanoröhren oder dergleichen dienen.

Bei einer Ausführungsform kann der Litzenkörper an seinen beiden Flachseiten zumindest abschnittsweise und/oder im Bereich des Fadenauges jeweils an der Außenfläche mit einer Metallschicht versehen sein. Dies verringert den Verschleiß des Litzenkörpers insbesondere in den Kontaktbereichen mit den Kettfäden. Die Metallschichten können miteinander elektrisch verbunden sein und in Gebrauchslage der Litze eine elektrische Verbindung zu wenigstens einer elektrisch leitfähigen Litzentragschiene herstellen.

Auf diese Weise ist es möglich, für jeden Längsabschnitt des Litzenkörpers das geeignete Kunststoff- oder Verbundmaterial einzusetzen, das die für diesen Längsabschnitt erforderlichen Eigenschaften aufweist. Beispielsweise kann der das Fadenauge aufweisende Längsabschnitt aus einem Kunststoff- oder Verbundmaterial hergestellt sein, das eine größere Verschleißfestigkeit aufweist, als die Kunststoff- oder Verbundmaterialien, die zur Herstellung der anderen Längsabschnitte des Litzenkörpers verwendet werden. Im Bereich der Endösen können Kunststoff- oder Verbundmaterialien eingesetzt werden, die gute Gleiteigenschaften gegenüber der Litzentragschiene und eine hohe Zähigkeit aufweisen.

Weiterhin ist es bei einer vorteilhaften Ausgestaltung der Weblitze vorgesehen, dass zwei in Längsrichtung des Litzenkörpers aneinander angrenzende Längsabschnitte eine unterschiedliche Dicke aufweisen. Die Dicke wird rechtwinklig zur Erstreckungsebene des bandförmigen Litzenkörpers gemessen. Es ist dabei möglich, die Dicke der einzelnen Längsabschnitte an deren Funktion anzupassen. Z.B kann der Bereich des Fadenauges, der aufgrund des Kettfadens einem größeren Verschleiß unterliegt, dicker ausgeführt sein, als die sich daran anschließenden Längsabschnitte. Auch die endseitigen Längsbereiche, in denen die Endösen angeordnet sind, können gegenüber dem jeweils angrenzenden Längsabschnitt dicker ausgestaltet sein. Denn auch dort unterliegt die Weblitze aufgrund des Spiels der Endöse gegenüber der Litzentragschiene einer erhöhten Beanspruchung.

Somit können die aneinander angrenzenden Längsabschnitte sowohl eine unterschiedliche Dicke aufweisen, als auch verschiedene Kunststoff- oder Verbundmaterialien enthalten.

Ein weiterer wesentlicher Vorteil der erfindungsgemäßen Weblitze besteht darin, dass der Litzenkörper als Trennteil ausgestaltet ist. Der Litzenkörper wird nicht durch Gießen in einer Form gebildet, sondern aus einer Folienbahn herausgetrennt. Eine solche Folienbahn kann beispielsweise durch Extrudieren oder Coextrudieren hergestellt sein. Die Bahnabschnitte, die anschließend die verschiedenen Längsabschnitte des Litzenkörpers bilden, sind aus unterschiedlichen Kunststoff- oder Verbundmaterialien hergestellt und können optional auch unterschiedlich dick sein. Die Herstellung ist damit äuβerst effizient und kostengünstig. Bei gegossenen Litzenkörpern kann abhängig vom verwendeten Kunststoffmaterial auch ein großer Verschleiß der Herstellungsform entstehen. Das Erneuern oder Ersetzen solcher Herstellungsformen ist teuer. Demgegenüber ist ein als Trennteil ausgestalteter Litzenkörper, der aus einer Folienbahn herausgetrennt und vorzugsweise herausgestanzt wird, insbesondere bei sehr großen Stückzahlen kostengünstiger herzustellen. Außerdem ist die Herstellung von Litzenkörpern in Form von Trennteilen bzw. Stanzteilen flexibler. Beispielsweise können Anpassungen der Endösen oder andere Dimensionsanderungen am Litzenkörper sehr einfach durch Anpassen der aus der Folienbahn herauszutrennenden Kontur vorgenommen werden, was bei einem gegossenen Litzenkörper nur mit erheblich größerem Arbeits- und Kostenaufwand möglich ist. Z.B. kann ein Litzenkörper mit ringförmig geschlossenen oder seitlich an einer Stelle geöffneten Endösen hergestellt werden, der aus derselben Folienbahn herausgetrennt werden kann. Lediglich der herauszutrennende Kontur des Litzenkörpers, beispielsweise das Stanzwerkzeug, muss gegebenenfalls angepasst werden. Beim Heraustrennen des Litzenkörpers durch einen Schneidvorgang, beispielsweise mit einem Laser oder einem Wasserstrahl, muss lediglich der neue Konturverlauf programmiert werden. Beim Herausstanzen des Litzenkörpers muss das Stanzwerkzeug bzw. Teile davon ausgetauscht werden. Die erfindungsgemäße Weblitze kann daher in verschiedenen Konturvarianten angeboten werden, ohne dass hohe Investitionskosten in Werkzeuge notwendig sind.

Zur Herstellung der Weblitze wird eine Folienbahn bereitgestellt, die mindestens zwei parallel nebeneinander verlaufende Bahnabschnitte aufweist. Diese Bahnabschnitte enthalten unterschiedliche Kunststoff- oder Verbundmaterialien oder weisen eine unterschiedliche Dicke auf. Eine solche Folienbahn lässt sich sehr einfach durch Coextrudieren herstellen. Vor dem Heraustrennen des Litzenkörpers kann die Folienbahn in ihrer Erstreckungsebene in Verlaufsrichtung oder quer dazu in Querrichtung verstreckt werden. Durch das Verstrecken kann die Festigkeit der Folienbahn erhöht werden. Dies wird dadurch erreicht, dass sich die Molekularstruktur in der Verstreckungsrichtung orientiert.

Anschließend kann der Litzenkörper durch einen Schneidvorgang, einen Stanzvorgang oder einen anderen Trennvorgang aus der Folienbahn herausgetrennt werden. Der Litzenkörper stellt mithin ein Trenn- oder Stanzteil dar.

Jeder Längsabschnitt des Litzenkörpers kann über seine gesamte Länge einen gleich bleibenden, insbesondere rechteckförmigen Querschnitt aufweisen. Die als Ausgangsmaterial bereitgestellte Folienbahn für das Heraustrennen des Litzenkörpers lässt sich dadurch sehr einfach und kostengünstig herstellen.

Jeder Längsabschnitt des Litzenkörpers besteht aus einem einheitlichen Kunststoff- oder Verbundmaterial. Alternativ hierzu ist es auch möglich, dass einer oder mehrere Längsabschnitte jeweils aus mehreren flächig aneinander anliegenden und miteinander verbundenen Folienlagen bestehen. Bei beiden Ausgestaltungen können für jeden Längsabschnitt diejenigen Materialien verwendet werden, die für die gewünschten Eigenschaften des betreffenden Längsabschnitts geeignet sind. Das Ausbilden eines Längsabschnitts aus mehreren flächigen Folienlagen bietet den Vorteil, dass beispielsweise in den äußeren Folienlagen verschleißfestes Material und in den inneren Folienlagen zugfestes Material eingesetzt werden kann, wodurch besonders vorteilhafte Litzenkörpergestaltungen zur Erhöhung der Standzeit der Weblitze möglich sind.

Es ist von Vorteil, wenn zumindest ein Längsabschnitt oder zumindest eine Folienlage aus einem Verbundmaterial besteht, wobei der Kunststoff als Kunststoffmatrix dient, die mit Zusatzelementen versehen ist. Die Zusatzelemente können kurze Fasern (so genannte "Whiskers") und/oder kugelförmige Elemente und/oder andere Körper enthalten. Dadurch kann beispielsweise die Verschleißfestigkeit und/oder die Zugfestigkeit des als Kunststoffmatrix dienenden Kunststoffmaterials weiter vergrößert werden. Als Werkstoffe für die Zusatzelemente eignet sich Karbon und/oder Glas und/oder Keramik und/oder Metall und/oder verschleißfeste Kunststoffkörper.

Als Kunststoff zur Herstellung eines Längsabschnitts des Litzenkörpers können eine oder mehrere der folgenden Kunststoffe verwendet werden: Polyamide, Kopolymere, Polykarbonate, Polyethylene, Polypropylene, Polystyrole, Phenolharze, etc. Diese Kunststoffe können allein oder in Kombination mit Zusatzelementen als Verbundwerkstoffe für Längsabschnitte eingesetzt werden.

Die Weblitze weist vorzugsweise einen mittleren Längsabschnitt auf, der das Fadenauge enthält. Insbesondere sind weiter zwei endseitige Längsabschnitte vorhanden, die jeweils eine Endöse der Weblitze enthalten. Der mittlere Längsabschnitt und die beiden endseitigen Längsabschnitte können durch jeweils einen Übergangs-Längsabschnitt miteinander verbunden sein. Bei dieser Aufteilung der Weblitze in drei oder fünf Längsabschnitte lässt sich das jeweils zur Herstellung verwendete Kunststoff- oder Verbundmaterial besonders gezielt auf die Funktion des jeweiligen Längsabschnitts abstimmen, so dass eine besonders langlebige Weblitze hergestellt werden kann. Gleichzeitig kann der Einsatz von teuren Kunststoff- oder Verbundmaterialien auf diejenigen Längsabschnitte beschränkt werden, die den Einsatz eines solchen Materials erfordern.

Bei einem Ausführungsbeispiel weist der das Fadenauge enthaltende Längsabschnitt die größte Verschleißfestigkeit auf und ist daher insbesondere aus Verbundwerkstoff hergestellt. Demgegenüber können insbesondere die Übergangs-Längsabschnitte aus einem weniger verschleißfesten Kunststoffmaterial ohne Zusatzelemente hergestellt sein, beispielsweise aus Polyethylen, Polypropylen oder Polykarbonat. Für den das Fadenauge enthaltenden mittleren Längsabschnitt kommt insbesondere Polyamid zur Herstellung in Betracht, das allein oder in Kombination mit Zusatzelementen als Verbundwerkstoff zur Herstellung eingesetzt werden kann.

Die Herstellung der Weblitze vereinfacht sich beispielsweise dadurch, dass das Fadenauge unmittelbar vom Litzenkörper bzw. vom mittleren Längsabschnitt sozusagen einsatzlos gebildet ist. Ein eingesetztes Maillon als Fadenauge kann entfallen.

Im Folgenden wird die Weblitze und das Herstellungsverfahren anhand von Ausführungsbeispielen erläutert. Aus der Beschreibung und den abhängigen Patentansprüchen ergeben sich weitere vorteilhafte Ausgestaltungen, wobei die Zeichnung ergänzend heranzuziehen ist. Es zeigen:
Fig. 1 eine stark schematisierte Darstellung einer Weblitze in Seitenansicht auf die Endösen und das Fadenauge,
Fig. 2 eine schematische perspektivische Darstellung einer mehrlagigen Bahn, aus der der Litzenkörper nach Fig. 1 ausgestanzt werden kann,
Fig. 3 ein weiteres Ausführungsbeispiel einer Weblitze in stark schematisierter Seitenansicht auf die Endösen, wobei der Längsabschnitt um das Fadenauge herum tordiert ist,
Fig. 4 eine teilgeschnittene Darstellung quer zur Längsrichtung der Weblitze nach Fig. 3 gemäß Schnittlinie IV-IV,
Fig. 5 eine weitere Ausführungsform einer Weblitze in schematischer Ansicht auf die Schmalseite des Litzenkörpers, der unterschiedlich dicke Längsabschnitte aufweist und
Fig. 6 eine Abwandlung des Ausführungsbeispiels der Weblitze aus Fig. 5 bei dem die Übergangsstellen zwischen zwei verschieden dicken Längsabschnitten stufenlos ausgeführt sind.

In der Zeichnung sind verschiedene Ausführungsbeispiele einer Weblitze 10 mit einem sich in einer Längsrichtung L erstreckenden Litzenkörper 11 dargestellt. Der Litzenkörper 11 weist beispielsgemäß ein Fadenauge 12 zur Führung eines Kettfadens 19 auf, das in etwa mittig im Litzenkörper 11 angeordnet ist. An den beiden Längsenden ist am Litzenkörper 11 jeweils eine Endöse 13 vorgesehen, die zum Anordnen der Weblitze an den Litzentragschienen eines Webschafts dient. Die Endösen 13 sind bei den hier erläuterten Ausführungsbeispielen als ringförmig geschlossene O-förmige Endösen dargestellt. Alternativ hierzu ist es auch möglich, die Endösen seitlich an einer Stelle zu öffnen, um C-förmige oder J-förmige Endösen zu bilden.

Die in der Zeichnung dargestellten verschiedenen Ausführungsformen der Weblitze 10 sind stark schematisiert und nicht maßstabsgetreu dargestellt. In der Zeichnung soll lediglich das Prinzip der erfindungsgemäßen Weblitze 10 sowie deren Herstellung veranschaulicht werden.

Der Litzenkörper 11 ist vollständig aus mehreren Kunststoff- oder Verbundmaterialien hergestellt. Er weist einen das Fadenauge 12 aufweisenden mittleren Längsabschnitt 14 auf, an den sich jeweils ein Übergangs-Längsabschnitt 15 anschließt. Der Litzenkörper 11 enthält ferner zwei endseitige Längsabschnitte 16, die jeweils eine Endöse 13 enthalten. Die beiden endseitigen Längsabschnitte 16 sind unmittelbar mit jeweils einem der Übergangs-Längsabschnitte 15 verbunden. In Abwandlung zum dargestellten Ausführungsbeispiel könnten die endseitigen Längsabschnitte 16 auch unmittelbar mit dem mittleren Längsabschnitt 14 verbunden sein, wodurch die Übergangs-Längsabschnitte 15 entfallen. Die Anzahl der Längsabschnitte kann variieren.

Zwei in Längsrichtung L des Litzenkörpers 11 aufeinanderfolgende Längsabschnitte 14, 15 bzw. 15, 16 sind aus unterschiedlichen Kunststoff- oder Verbundmaterialien hergestellt. Dadurch ist es möglich, abhängig von den gewünschten Eigenschaften des Litzenkörpers 11 im betreffenden Längsabschnitt 14, 15, 16 ein geeignetes Kunststoffmaterial oder Verbundmaterial auszuwählen und zur Herstellung des entsprechenden Längsabschnitts zu verwenden.

Der Litzenkörper 11 ist als Trennteil und insbesondere als Stanzteil ausgebildet. Zur Herstellung wird eine Folienbahn 18 bereitgestellt, aus der der Litzenkörper herausgetrennt wird. Vorzugsweise wird in einem einstufigen oder mehrstufigen Stanzverfahren das Fadenauge 12, die Endösen 13 sowie die Außenkontur 20 des Litzenkörpers herausgestanzt. Dies ermöglicht eine besonders wirtschaftliche und flexible Herstellung des Litzenkörpers 11. Insbesondere können Varianten des Litzenkörpers, bei denen sich die Form oder Größe des Fadenauges 12, der Endösen 13 oder der Außenkontur 20 verändert, aus derselben Folienbahn 18 herausgestanzt werden. Dazu kann das Schnittprogramm einer Laser- oder Wasserstrahlschneidanlage geändert werden oder das Stanzwerkzeug bzw. Teile davon ausgetauscht werden.

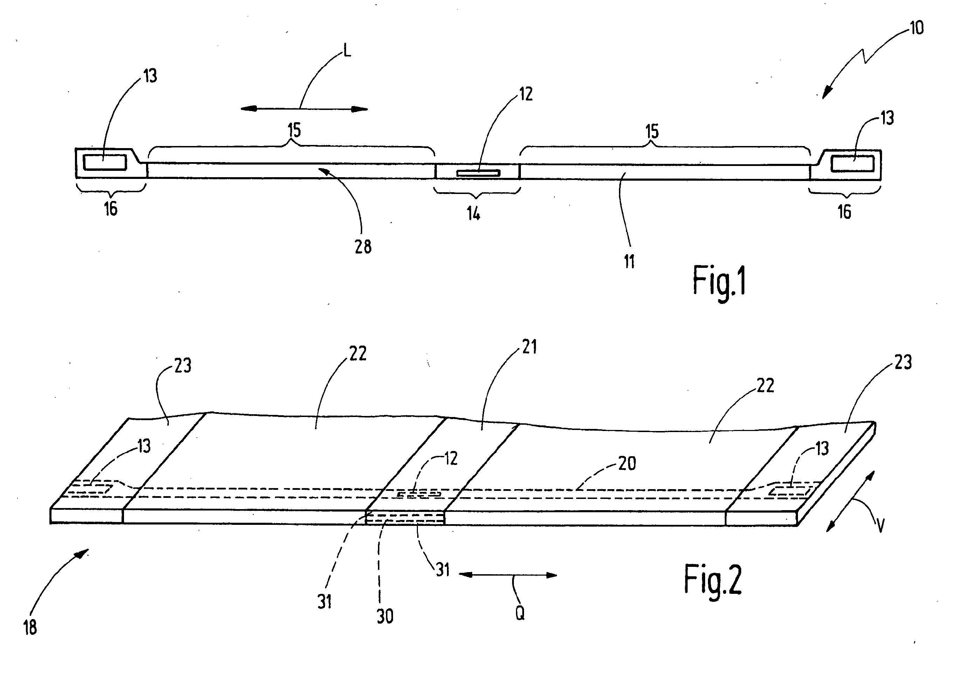

Um die verschiedenen Längsabschnitte 14, 15, 16 zu erhalten, weist die Folienbahn 18 parallel verlaufende Bahnabschnitte auf, die sich parallel zueinander in Verlaufsrichtung V der Folienbahn 18 erstrecken. Entsprechend dem mittleren Längsabschnitt 14 ist ein mittlerer Bahnabschnitt 21 vorhanden, an den sich in Querrichtung Q quer zur Verlaufsrichtung V jeweils ein Übergangsbahnabschnitt 22 anschließt. Auf der gegenüber dem mittleren Bahnabschnitt 21 anderen Seite schließt sich an die Übergangsbahnabschnitte 22 jeweils ein randseitiger Bahnabschnitt 23 an. Beim Ausstanzen des Litzenkörpers 11 wird durch die Übergangsbahnabschnitte 22 der jeweilige Übergangs-Längsabschnitt 15 und durch die randseitigen Bahnabschnitte 23 der jeweilige endseitige Längsabschnitt 16 gebildet. Die Anzahl der Bahnabschnitte 21, 22, 23 kann variieren und hängt davon ab, wie viele Längsabschnitte 14, 15, 16 am Litzenkörper 11 vorgesehen sind. Bei dem in Figuren 1 und 2 dargestellten Ausführungsbeispiel sind fünf Längsabschnitte 14, 15, 16 und daher auch fünf Bahnabschnitte 21, 22, 23 der Folienbahn 18 vorhanden. Für den mittleren Längsabschnitt 14 sowie die endseitigen Längsabschnitte 16 wird ein anderes Kunststoff- oder Verbundmaterial verwendet, als für die Übergangs-Längsabschnitte 15, die einem geringeren Verschleiß unterliegen. Insbesondere für den mittleren Längsabschnitt 14, in dem das Fadenauge 12 liegt, ist eine hohe Verschleißfestigkeit gefordert, da es dort durch den im Fadenauge 12 geführten Kettfaden 19 und auch durch die neben der Weblitze 10 durch den Webschaft hindurchlaufenden Kettfäden zu einer besonders hohen Beanspruchung des Litzenkörpers 11 kommt.

Bei den in den Figuren 1 bis 4 dargestellten Ausführungsbeispielen der Weblitze 10 besteht jeder der Längsabschnitte 14, 15, 16 aus einem einheitlichen und vorzugsweise homogenen Kunststoff- oder Verbundmaterial. Die für den Litzenkörper verwendeten Materialien können sehr einfach durch mechanisches Trennen der einzelnen Längsabschnitte 14, 15, 16 wieder voneinander getrennt werden, beispielsweise zur Wiederverwertung der Materialien einer nicht mehr verwendeten Weblitze 10. Um dies zu erreichen, wird vorzugsweise durch Coextrusion die Folienbahn 18 mit in Querrichtung Q aneinander anschließenden Bahnabschnitten 21, 22, 23 gebildet. Dabei werden die einzelnen Bahnabschnitte 21, 22, 23 bereits bei der Herstellung der Folienbahn 18 miteinander verbunden. Ein separater Fügeprozess zum Verbinden einzelner Bahnabschnitte 21, 22, 23 ist also nicht zwingend erforderlich.

Um die Festigkeit der Folienbahn 18 in Verlaufsrichtung V und/oder in Querrichtung Q zu verbessern kann die Folienbahn 18 nach dem Extrudieren verstreckt werden. Durch das Verstrecken richtet sich die Molekularstruktur in Verstreckrichtung aus und die Festigkeit der Folienbahn 18 wird in der entsprechenden Verstreckrichtung vergrößert. Vorzugsweise wird die Folienbahn 18 zumindest in Querrichtung Q verstreckt, was zu einer höheren Festigkeit des Litzenkörpers 11 in seiner Längsrichtung L führt. Die durch das Verstrecken bewirkte plastische Verformung der Folienbahn 18 muss beim Extrudieren berücksichtigt werden, so das die Dimensionen der einzelnen Bahnabschnitte 21, 22, 23 für die Längsabschnitte 14, 15, 16 des Litzenkörpers 11 den jeweiligen Sollwerten entsprechen.

Bei den hier beschriebenen Ausführungsbeispielen wird die Weblitze 10 durch den Litzenkörper 11 gebildet. Einsätze, wie etwa ein Maillon am Fadenauge 12 oder Einsätze an den Endösen 13 sind vorzugsweise nicht vorgesehen. Der als Stanzteil ausgebildete Litzenkörper 11 stellt die fertig hergestellte Weblitze 10 dar.

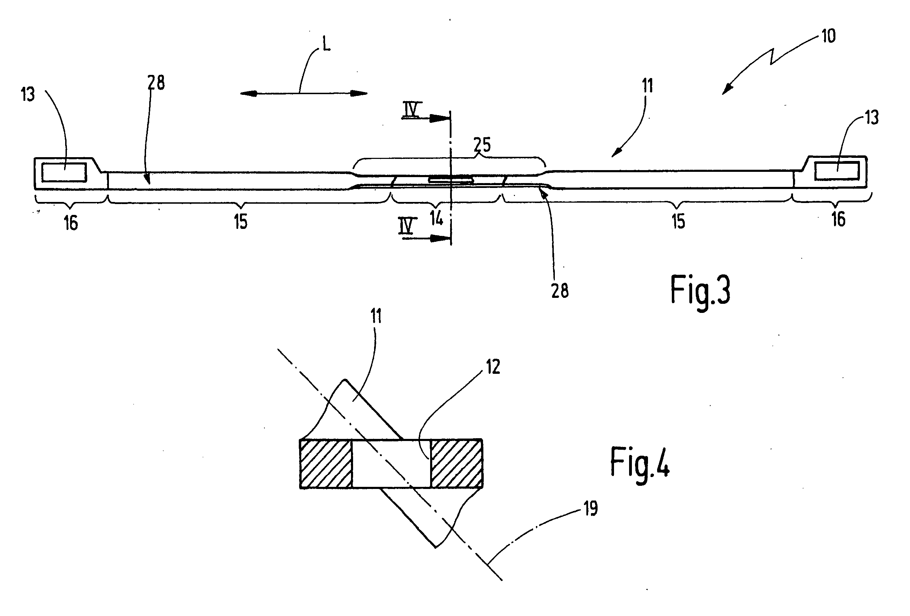

Bei bevorzugten Ausführungsbeispielen können weitere Bearbeitungsschritte nach dem Ausstanzen des Litzenkörpers 11 entfallen. In Abwandlung hierzu ist in den Figuren 3 und 4 eine Ausführungsform der Weblitze 10 dargestellt, bei der nach dem Ausstanzen ein weiterer Bearbeitungsschritt erfolgt. Ein mittlerer Bereich um das Fadenauge 12 wird plastisch und vorzugsweise thermoplastisch verformt. In verformten Zustand ist dieser mittlere Bereich des Litzenkörpers 11 um die Längsachse tordiert, so dass die Ebene, in der das Fadenauge 12 liegt gegenüber der Ebene, in der die Endösen 13 liegen, geneigt verläuft. Dadurch ist es möglich, einen Kettfaden 19 durch das Fadenauge 12 zu führen, ohne dass der Kettfaden 19 durch ein Torsionsmoment der Weblitze 10 beaufschlagt wird, wie dies schematisch in Fig. 4 veranschaulicht ist. Der tordierte mittlere Bereich 25 kann dabei der Länge des mittleren Längsabschnitts 14 des Litzenkörpers 11 entsprechen. Wie in Fig. 3 dargestellt, kann die Länge des mittleren Bereichs 25 jedoch auch von der Länge des mittleren Längsabschnitts 14 abweichen und größer oder kleiner gewählt werden.

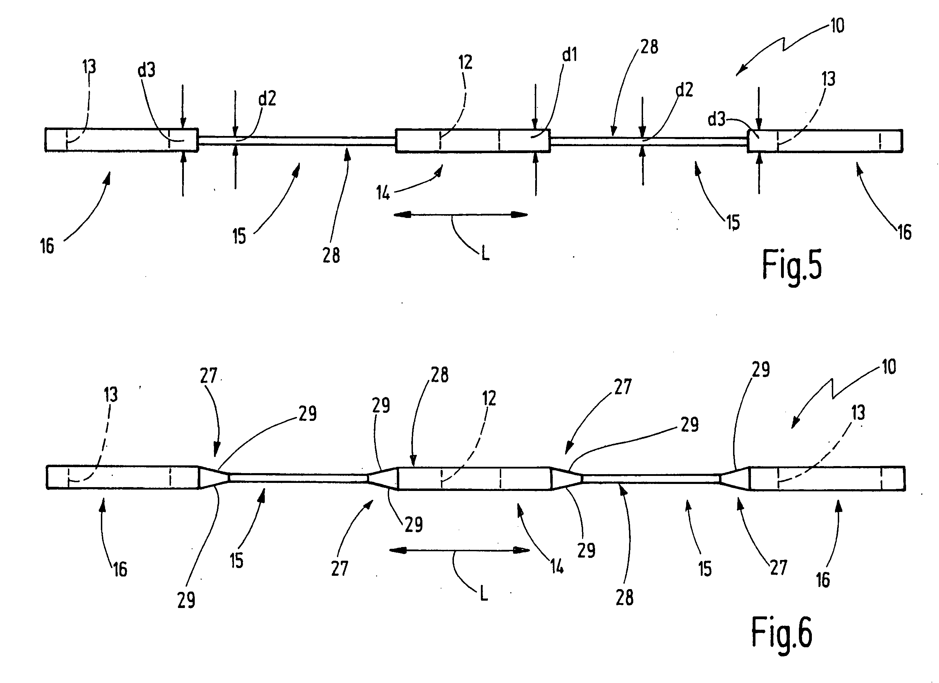

Eine weitere Ausgestaltungsmöglichkeit der Weblitze 10 ist in den Figuren 5 und 6 veranschaulicht. Im Unterschied zu den bisher beschriebenen Ausführungsformen sind die Dicken von unterschiedlichen Längsabschnitten 14, 15, 16 des Litzenkörpers 11 verschieden groß. Dadurch kann alternativ oder zusätzlich zur Verwendung von unterschiedlichen Materialien auch die Dicke der Längsabschnitte 14, 15, 16 des Litzenkörpers 11 an die jeweils gewünschten Eigenschaften hinsichtlich Zugfestigkeit und/oder Verschleiß und/oder Elastizität und/oder Dämpfung angepasst werden. Diese Ausgestaltungsmöglichkeit kann ich Kombination oder unabhängig von den zuvor beschriebenen Ausführungsformen realisiert werden.

Der mittlere Längsabschnitt 14 des Litzenkörpers 11 weist rechtwinklig zur Erstreckungsebene des bandförmigen Litzenkörpers 11 gemessen eine Dicke d1 auf, die größer ist als die Dicke d2 der sich zu beiden Seiten anschließenden Übergangs-Längsabschnitte 15. Die Übergangs-Längsabschnitte 15 sind einem geringeren Verschleiß unterworfen als der fadenführende Bereich im mittleren Längsabschnitt 14. Deshalb ist eine geringere Dicke d2 ausreichend.

Auch die Dicke d3 der beiden endseitigen Randabschnitte 16 ist größer als die des jeweils anschließenden Übergangs-Längsabschnitts 15. In der schematischen Darstellung sind die Dicken d1 und d3 des mittleren Längsabschnitts 14 und der beiden endseitigen Längsabschnitte 16 gleich groß dargestellt. Bei einer abgewandelten Ausführungsform können die Dicken d1 und d3 auch unterschiedlich groß gewählt werden. Beispielsweise kann die Dicke d1 des mittleren Längsabschnitts 14 am größten sein, da der mittlere Längsabschnitt 14 durch die Kettfäden am stärksten beansprucht wird.

Bei einer einfachen Ausgestaltung ist der Querschnitt in jedem Längsabschnitt 14, 15, 16 in Längsrichtung L gesehen durchgehend konstant. Beispielsweise kann ein jeweils rechteckförmiger Querschnitt vorgesehen sein. Die Übergänge zwischen zwei aneinander anschließenden Längsabschnitten 14 und 15 bzw. 15 und 16 sind dann durch Stufen gebildet. Besteht abhängig von den Dickenunterschieden zwischen zwei aneinander anschließenden Längsabschnitten und insbesondere zwischen dem mittleren Abschnitt 14 und den sich daran anschließenden Längsabschnitten 15 die Gefahr, dass ein zwischen zwei Weblitzen 10 zu einem anderen Webschaft hindurch geführter Kettfaden an der gestuften Übergangsstelle zwischen zwei Längsabschnitten 14, 15 hängen bleibt, so können diese Übergänge 27 auch stufenlos und bei einer anderen Ausgestaltung auch kantenlos realisiert werden.

Eine Möglichkeit zur Bildung eines stufenlosen Übergangs 27 zwischen zwei benachbarten Längsabschnitten 14 und 15 bzw. 15 und 16 ist in Fig. 6 veranschaulicht. In jedem Übergang 27 ist an den beiden Flachseiten 28 des Litzenkörpers 11 jeweils eine Schrägfläche 29 angeordnet. Dadurch entsteht anstelle einer Stufe ein geneigter Übergang zwischen zwei unterschiedlich dicken Längsabschnitten 14 und 15 bzw. 15 und 16. Ausgehend von den dickeren Längsabschnitten 14 und 16 verjüngt sich der Litzenkörper in den Übergängen 27 dabei kontinuierlich zu den dünneren Längsabschnitten 15 hin. Anstelle von Schrägflächen 29 könnten auch gewölbte und/oder geschwungene oder sonstige Übergangsflächen vorgesehen werden, die einen stufenlosen und/oder auch kantenlosen Übergang 27 gewährleisten. Bei dem in Fig. 6 dargestellten Ausführungsbeispiel ist eine sehr einfache Kontur der Übergänge 27 gewählt, die sich problemlos bei der Extrusion bzw. Coextrusion der Folienbahn 18 erzeugen lässt.

Bei einer weiteren abgewandelten Ausführungsform des Litzenkörpers 11 weist dieser in einem oder mehreren Längsabschnitten 14, 15, 16 einen mehrlagigen Aufbau auf. Beispielsweise kann eine innere Folienlage 30 sandwichartig zwischen zwei äußeren Folienlagen 31 angeordnet sein. Dies ist schematisch in Fig. 2 am mittleren Bahnabschnitt 21 dargestellt, der nach dem Ausstanzen des Litzenkörpers 11 den mittleren Längsabschnitt 14 bildet, so dass dort der mittleren Längsabschnitt 14 mehrlagig ausgestaltet ist. Dabei können die äußeren Folienlagen 31 aus einem besonders verschleißfesten Material hergestellt werden, während die innere Folienlage 30 beispielsweise die gewünschte Zugfestigkeit des mittleren Längsabschnitts 14 gewährleistet. Ein solcher mehrlagiger Aufbau kann nicht nur im mittleren Längsabschnitt 14, sondern auch in den anderen Längsabschnitten 15, 16 und insbesondere in den endseitigen Längsabschnitten 16 vorgesehen sein. Bei den Ausführungsformen gemäß der Figuren 5 und 6, bei denen verschiedene Längsabschnitte 14, 15, 16 unterschiedlich dick ausgeführt sind, kann die Anzahl der Folienlagen 30, 31 in den Längsabschnitten 14, 16 mit größerer Dicke d1, d3 größer sein als in den Längsabschnitten 15 mit geringerer Dicke d2. Es ist z.B. möglich, den mittleren Längsabschnitt 14 und die beiden endseitigen Längsabschnitte 16 jeweils dreilagig mit einer mittleren Folienlage 30 und zwei äußeren Folienlagen 31 auszuführen, während die Übergangs-Längsabschnitte 15 einlagig ausgestaltet sind. Dabei kann es vorteilhaft sein, wenn die mittleren Folienlage 30 durchgängig in Längsrichtung L durch den gesamten Litzenkörper 11 verläuft. Diese mittlere Folienlage 30 bestimmt die Zugfestigkeit des Litzenkörpers 11 und wird abschnittsweise durch äußere Folienlagen 31 verstärkt bzw. gegen Verschleiß geschützt.

Grundsätzlich kann die Anzahl der Folienlagen in den mehrlagigen Bereichen abhängig von den gewünschten mechanischen Eigenschaften gewählt werden. Es können auch mehr als drei Folienlagen vorgesehen sein.

Die vorliegende Erfindung betrifft eine Weblitze 10 mit einem sich in Längsrichtung L erstreckenden Litzenkörper 11, der ein Fadenauge 12 zur Führung eines Kettfadens 19 aufweist. An seinen beiden Enden ist jeweils eine Endöse 13 vorgesehen. Der Litzenkörper 11 ist aus bandförmigen, folienartig dünnen Material hergestellt. Er wird am Stück aus einer Folienbahn 18 herausgetrennt und vorzugsweise ausgestanzt. Der Litzenkörper 11 weist in seiner Längsrichtung L wenigstens zwei und vorzugsweise mindestens drei oder fünf aneinander anschließende Längsabschnitte 14, 15, 16 auf. Zwei in Längsrichtung L aneinander anschließende Längsabschnitte 14, 15 enthalten unterschiedliches Kunststoff- oder Verbundmaterial und/oder weisen eine unterschiedliche Dicke d1, d2 bzw. d2, d3 auf. Dadurch können die gewünschten mechanischen Eigenschaften hinsichtlich der Zugfestigkeit, Verschleißfestigkeit, Elastizität und/oder Dämpfung durch das geeignete Material und die geeignete Dicke d1, d2, d3 eingestellt werden. Eine sehr einfache und wirtschaftliche Herstellung ist dadurch erreicht, dass der Litzenkörper als Trennteil bzw. Stanzteil ausgestaltet ist. Er wird aus einer Folienbahn 18, die mehrere Bahnabschnitte 21, 22, 23 aufweist, herausgetrennt. Die Bahnabschnitte bilden nach dem Ausstanzen den Litzenkörpers 11 die verschiedenen Längsabschnitte 14, 15, 16.

### Bezugszeichenliste:

- 10: Weblitze
- 11: Litzenkörper
- 12: Fadenauge
- 13: Endöse
- 14: mittlerer Längsabschnitt
- 15: Übergangs-Längsabschnitt
- 16: endseitiger Längsabschnitt

- 18: Folienbahn
- 19: Kettfaden
- 20: Außenkontur
- 21: mittlerer Bahnabschnitt
- 22: Übergangsbahnabschnitt
- 23: randseitiger Bahnabschnitt

- 25: mittlerer Bereich

- 27: Übergang
- 28: Flachseite
- 29: Schrägfläche
- 30: innere Folienlage
- 31: äußere Folienlage

- d1: Dicke des mittleren Längsabschnitts
- d2: Dicke des Übergangs-Längsabschnitts
- d3: Dicke des endseitigen Längsabschnitts
- L: Längsrichtung
- Q: Querrichtung
- V: Verlaufsrichtung

## Patentansprüche

1. Weblitze (10) für einen Webschaft,
mit einem bandförmigen Litzenkörper (11), der sich in einer Längsrichtung (L) erstreckt und der ein Fadenauge (12) aufweist, das zur Aufnahme eines Kettfadens (19) dient,
wobei der Litzenkörper (11) zumindest zwei sich in Längsrichtung (L) aneinander anschließende Längsabschnitte (14, 15, 16) aufweist,
wobei der Litzenkörper (11) ein Trennteil ist, das aus einer Folienbahn (18) herausgetrennt ist,
**dadurch gekennzeichnet, dass**
zwei in Längsrichtung (L) unmittelbar aneina-der anschließende Längsabschnitte (14, 15, 16) unterschiedliche Kunststoff- oder Verbundmaterialien enthalten und jeder Längsabschnitt (14, 15, 16) des Litzenkörpers (11) aus einem einheitlichen Kunststoff- oder Verbundmaterial besteht.

2. Weblitze nach Anspruch 1,
**dadurch gekennzeichnet, dass** jeder Längsabschnitt (14, 15, 16) des Litzenkörpers (11) einen über seine gesamte Länge gleichbleibenden Querschnitt aufweist.

3. Weblitze nach Anspruch 1,
**dadurch gekennzeichnet, dass** zwei in Längsrichtung (L) unmittelbar aneinander anschließende Längsabschnitte (14, 15, 16) eine unterschiedliche Dicke (d1, d2, d3) aufweisen..

4. Weblitze nach Anspruch 1,
**dadurch gekennzeichnet, dass** zumindest ein Längsabschnitt (14, 15, 16) oder zumindest eine Folienlage (30, 31) aus einem Verbundmaterial besteht, das eine Kunststoffmatrix enthält, die mit Zusatzelementen aus Metall und/oder Glas und/oder Keramik verbunden ist.

5. Weblitze nach Anspruch 4,
**dadurch gekennzeichnet, dass** die Zusatzelemente in Form von Fasern und/oder Kugeln in der Kunststoffmatrix angeordnet sind.

6. Weblitze nach Anspruch 1,
**dadurch gekennzeichnet, dass** ein mittlerer Längsabschnitt (14) vorgesehen ist, der das Fadenauge (12) aufweist und dass zwei endseitige Längsabschnitte (16) vorgesehen sind, die jeweils eine Endöse (13) aufweisen.

7. Weblitze nach Anspruch 6,
**dadurch gekennzeichnet, dass** die endseitigen Längsabschnitte (16) dieselbe Dicke (d3) aufweisen.

8. Weblitze nach Anspruch 6,
**dadurch gekennzeichnet, dass** der mittlere Längsabschnitt (14) über jeweils einen Übergangs-Längsabschnitt (15) mit den endseitigen Längsabschnitten (16) verbunden ist.

9. Weblitze nach Anspruch 8,
**dadurch gekennzeichnet, dass** die Übergangs-Längsabschnitte (15) eine geringere Dicke (d2) aufweisen als die endseitigen Längsabschnitte (16) und/oder der mittlere Längsabschnitt (14).

10. Weblitze nach Anspruch 8,
**dadurch gekennzeichnet, dass** das für den mittleren Längsabschnitt (14) verwendete Kunststoff- oder Verbundmaterial und/oder das für die endseitigen Längsabschnitte (16) verwendete Kunststoff- oder Verbundmaterial eine höhere Verschließfestigkeit aufweist, als das für die Übergangs-Längsabschnitte (15) verwendete Kunststoff- oder Verbundmaterial.

11. Verfahren zur Herstellung einer Weblitze (10) mit einem Litzenkörper (11), der sich in einer Längsrichtung (L) erstreckt und der ein Fadenauge (12) aufweist, das zur Aufnahme eines Kettfadens (19) dient, mit den Schritten:
- Bereitstellen einer Folienbahn (18) mit zumindest zwei parallel nebeneinander verlaufenden Bahnabschnitten (21, 22, 23), wobei zwei unmittelbar aneinander anschließende Bahnabschnitte (21, 22 und 22, 23) unterschiedliche Kunststoff- oder Verbundmaterialien enthalten und jeder Bahnabschnitt (21, 22 und 22, 23) aus einem einheitlichen Kunststoff- oder Verbundmaterial besieht,
- Heraustrennen des Litzenkörpers (11) aus der Folienbahn (18) derart, dass die Längsrichtung (L) des Litzenkörpers (11) quer zur Verlaufsrichtung (V) der Bahnabschnitte (21, 22, 23) ausgerichtet ist.

12. Verfahren nach Anspruch 11,
**dadurch gekennzeichnet, dass** die Folienbahn (18) durch Coextrudieren hergestellt ist.

13. Verfahren nach Anspruch 11,
**dadurch gekennzeichnet, dass** die Folienbahn (18) in Verlaufsrichtung (V) der Bahnabschnitte (21, 22, 23) und/oder in Querrichtung (Q) quer Verlaufsrichtung (V) verstreckt wird, bevor der Litzenkörper (11) herausgetrennt wird.

14. Verfahren nach Anspruch 11,
**dadurch gekennzeichnet, dass** zwei unmittelbar aneinander anschließende Bahnabschnitte (21, 22 und 22, 23) eine unterschiedliche Dicke (d1, d2 oder d2, d3) aufweisen.

## Claims

1. Heald (10) for a heald frame,
with a band-shaped heald body (11), which extends in a longitudinal direction (L) and which has a thread eyelet (12) that serves to receive a warp thread (19),
wherein the heald body (11) has at least two longitudinal sections (14, 15, 16) adjoining one another in the longitudinal direction (L),
wherein the heald body (11) is a separation part, which is detached from a foil web (18),
**characterised in that** two longitudinal sections (14, 15, 16) directly adjoining one another in the longitudinal direction (L) contain different plastic or composite materials and each longitudinal section (14, 15, 16) of the heald body (11) is made from a uniform plastic or composite material.

2. Heald according to claim 1, **characterised in that** each longitudinal section (14, 15, 16) of the heald body (11) has a constant cross-section over its entire length.

3. Heald according to claim 1, **characterised in that** two longitudinal sections (14, 15, 16) directly adjoining one another in the longitudinal direction (L) have a different thickness (d1, d2, d3).

4. Heald according to claim 1, **characterised in that** at least one longitudinal section (14, 15, 16) or at least one foil layer (30, 31) is made from a composite material, which contains a plastic matrix, which is joined to addition elements composed of metal and/or glass and/or ceramic.

5. Heald according to claim 4, **characterised in that** the addition elements are arranged in the plastic matrix in the form of fibres and/or spheres.

6. Heald according to claim 1, **characterised in that** a middle longitudinal section (14) is provided, which has the thread eyelet (12), and that two end longitudinal sections (16) are provided, which respectively have an end eyelet (13).

7. Heald according to claim 6, **characterised in that** the end longitudinal sections (16) have the same thickness (d3).

8. Heald according to claim 6, **characterised in that** the middle longitudinal section (14) is connected to the end longitudinal sections (16) by means of a respective transition longitudinal section (15).

9. Heald according to claim 8, **characterised in that** the transition longitudinal sections (15) have a smaller thickness (d2) than the end longitudinal sections (16) and/or the middle longitudinal section (14).

10. Heald according to claim 8, **characterised in that** the plastic or composite material used for the middle longitudinal section (14) and/or the plastic or composite material used for the end longitudinal sections (16) has a higher wear-resistance than the plastic or composite material used for the transition longitudinal sections (15).

11. Process for the production of a heald (10) with a heald body (11), which extends in a longitudinal direction (L) and which has a thread eyelet (12) that serves to receive a warp thread (19), with the following steps:
• providing a foil web (18) with at least two web sections (21, 22, 23) running parallel next to one another, wherein two web sections (21, 22 and 22, 23) directly adjoining one another contain different plastic or composite materials and each web section (21, 22 and 22, 23) is made from a uniform plastic or composite material;
• detaching the heald body (11) from the foil web (18) in such a manner that the longitudinal direction (L) of the heald body (11) is oriented transversely to the running direction (V) of the web sections (21, 22, 23).

12. Process according to claim 11, **characterised in that** the foil web (18) is produced by co-extrusion.

13. Process according to claim 11, **characterised in that** the foil web (18) is stretched in the running direction (V) of the web sections (21, 22, 23) and/or in transverse direction (Q) transversely to the running direction (V) before the heald body (11) is detached.

14. Process according to claim 11, **characterised in that** two web sections (21, 22 and 22, 23) directly adjoining one another have a different thickness (d1, d2 or d2, d3).

## Revendications

1. Lisse (10) destinée à une lame de métier à tisser,
comprenant un corps de lisse (11) en forme de bande, qui s'étend dans une direction longitudinale (L) et qui présente un oeil (12) servant à recevoir un fil de chaîne (19),
le corps de lisse (11) présentant au moins deux parties longitudinales (14, 15, 16) qui se raccordent l'une à l'autre dans la direction longitudinale (L),
le corps de lisse (11) étant une pièce découpée qui est découpée dans une bande de feuille (18),
**caractérisée en ce que**
deux parties longitudinales (14, 15, 16) qui se raccordent directement l'une à l'autre dans la direction longitudinale (L) contiennent des matières synthétiques ou composites différentes et chaque partie longitudinale (14, 15, 16) du corps de lisse (11) est constituée d'une matière synthétique ou composite homogène.

2. Lisse selon la revendication 1, **caractérisée en ce que** chaque partie longitudinale (14, 15, 16) du corps de lisse (11) présente une section transversale qui est constante sur toute sa longueur.

3. Lisse selon la revendication 1, **caractérisée en ce que** deux parties longitudinales (14, 15, 16) qui se raccordent directement l'une à l'autre dans la direction longitudinale (L) présentent une épaisseur (d1, d2, d3) différente.

4. Lisse selon la revendication 1, **caractérisée en ce qu'**au moins une partie longitudinale (14, 15, 16) ou au moins une couche de feuille (30, 31) est constituée d'une matière composite qui comporte une matrice en matière synthétique liée à des éléments additionnels en métal et/ou en verre et/ou en céramique.

5. Lisse selon la revendication 4, **caractérisée en ce que** les éléments additionnels sont disposés sous forme de fibres et/ou de billes dans la matrice en matière synthétique.

6. Lisse selon la revendication 1, **caractérisée en ce qu'**il est prévu une partie longitudinale intermédiaire (14) qui présente l'oeil (12), et **en ce qu'**il est prévu deux parties longitudinales d'extrémité (16) qui présentent chacune un oeillet d'extrémité (13).

7. Lisse selon la revendication 6, **caractérisée en ce que** les parties longitudinales d'extrémité (16) présentent la même épaisseur (d3).

8. Lisse selon la revendication 6, **caractérisée en ce que** la partie longitudinale intermédiaire (14) est reliée respectivement par une partie longitudinale de transition (15) aux parties longitudinales d'extrémité (16).

9. Lisse selon la revendication 8, **caractérisée en ce que** les parties longitudinales de transition (15) présentent une épaisseur (d2) inférieure à celle des parties longitudinales d'extrémité (16) et/ou de la partie longitudinale intermédiaire (14).

10. Lisse selon la revendication 8, **caractérisée en ce que** la matière synthétique ou composite utilisée pour la partie longitudinale intermédiaire (14) et/ou la matière synthétique ou composite utilisée pour les parties longitudinales d'extrémité (16) présentent une résistance à l'usure plus élevée que la matière synthétique ou composite utilisée pour les parties longitudinales de transition (15).

11. Procédé de fabrication d'une lisse (10) comprenant un corps de lisse (11) qui s'étend dans une direction longitudinale (L) et qui présente un oeil (12) servant à recevoir un fil de chaîne (19), comportant les étapes suivantes :
- préparation d'une bande de feuille (18) comprenant au moins deux parties de bande (21, 22, 23) s'étendant parallèlement l'une à l'autre, sachant que deux parties de bande (21, 22 et 22, 23) qui sont directement adjacentes l'une à l'autre comportent des matières synthétiques ou composites différentes, et chaque partie de bande (21, 22 et 22, 23) est constituée d'une matière synthétique ou composite homogène,
- découpe du corps de lisse (11) dans la bande de feuille (18), de manière à ce que la direction longitudinale (L) du corps de lisse (11) soit orientée perpendiculairement au sens (V) des parties de bande (21, 22, 23).

12. Procédé selon la revendication 11, **caractérisé en ce que** la bande de feuille (18) est fabriquée par coextrusion..

13. Procédé selon la revendication 11, **caractérisé en ce que** la bande de feuille (18) est étirée dans le sens (V) des parties de bande (21, 22, 23) et/ou dans le sens transversal (Q) perpendiculaire au sens (V), avant que le corps de lisse (11) ne soit découpé.

14. Procédé selon la revendication 11, **caractérisé en ce que** deux parties de bande (21, 22 et 22, 23) directement adjacentes l'une à l'autre présentent une épaisseur (d1, d2 ou d2, d3) différente.
